# EUROPEAN PATENT SPECIFICATION

(11) **EP 4 078 223 B1**
(45) Date of publication and mention of the grant of the patent: **18.11.2026**
(21) Application number: 20824491.3
(22) Date of filing: 09.12.2020
(51) Int. Cl.: G01S 15/87, G01S 15/931, G01S 7/52, H04L 12/40

(54) **METHOD FOR INITIALIZING AN ULTRASONIC MONITORING SYSTEM COMPRISING MULTIPLE ULTRASONIC SENSORS AND ULTRASONIC MONITORING SYSTEM COMPRISING MULTIPLE ULTRASONIC SENSORS**
VERFAHREN ZUR INITIALISIERUNG EINES ULTRASCHALLÜBERWACHUNGSSYSTEMS MIT MEHREREN ULTRASCHALLSENSOREN UND ULTRASCHALLÜBERWACHUNGSSYSTEM MIT MEHREREN ULTRASCHALLSENSOREN
PROCÉDÉ D'INITIALISATION D'UN SYSTÈME DE SURVEILLANCE À ULTRASONS COMPRENANT DE MULTIPLES CAPTEURS À ULTRASONS ET SYSTÈME DE SURVEILLANCE À ULTRASONS COMPRENANT DE MULTIPLES CAPTEURS À ULTRASONS

(30) Priority: 17.12.2019 DE 102019134735
(43) Date of publication of application: 26.10.2022
(73) Proprietor: Valeo Schalter und Sensoren GmbH, 74321 Bietigheim-Bissingen (DE)
(72) Inventor: GANESAN, Arun, 74321 Bietigheim-Bissingen (DE); MAURER, Philipp, 74321 Bietigheim-Bissingen (DE); GOWRIPUROHITH, Vijayakumar, Lakshminarasimha, 74321 Bietigheim-Bissingen (DE); PATTANAIK, Gyanaranjan, 74321 Bietigheim-Bissingen (DE)
(74) Representative: Pothmann, Karsten
(86) International application number: PCT/EP2020/085251
(87) International publication number: WO 2021/122209

(56) References cited:
- EP-A1- 3 454 075
- DE-B3- 102006 012 237
- US-A1- 2019 257 676

## Description

The present invention refers to a method for initializing an ultrasonic monitoring system for a vehicle comprising multiple ultrasonic sensors arranged in a cascade, wherein the ultrasonic sensors comprise a supply voltage connector for connection to a DC supply line, a ground connector for connection to ground, an input communication line connector for connected to a first segment of a communication line, in particular for monitoring reception of signals during initialization, and an output communication line connector connected to a second segment of the communication line, in particular for transmitting signals during initialization, and a connection unit for interconnecting the input communication line connector and the output communication line connector.

The present invention also refers to an ultrasonic monitoring system for a vehicle comprising multiple ultrasonic sensors arranged in a cascade, wherein each of the multiple ultrasonic sensors comprises a supply voltage connector for connection to a DC supply line, a ground connector for connection to ground, an input communication line connector for connecting to a first segment of a communication line, in particular for monitoring reception of signals during initialization, an output communication line connector for connecting to a second segment of the communication line, in particular for transmitting signals during initialization, and a connection unit for interconnecting the input communication line connector and the output communication line connector, wherein the ultrasonic monitoring system is adapted to perform the above method.

Ultrasonic sensors are widely used in state of the Art vehicles. The ultrasonic sensors emit ultrasonic pulses into an environment of the vehicle and receives reflections of the emitted pulses from any kind of objects in the surrounding. The reflections are processed in order to determine distances to these objects or even further information in respect to the surrounding of the vehicle.

Ultrasonic monitoring systems comprise multiple ultrasonic sensors, which are arranged e.g. along a front or rear side of the vehicle. Hence, the ultrasonic monitoring system can be used by way of example to employ a parking assistance functionality. In the case of parking assistance, an output is generated depending on the distances to the objects in the surrounding.

In order to provide this output, the ultrasonic monitoring system can comprise a central processing unit, which is connected to each of the ultrasonic sensors and receives sensors information in respect to the objects in the surrounding. The sensor information can comprises raw data, e.g. data regarding the reflections of the ultrasonic pulses emitted by the ultrasonic sensors. Alternatively, the sensor information comprises information, which is based on a processing of the raw data, e.g. information in respect of a closest object within the range of each of the ultrasonic sensors. This sensor information is commonly processed in order to generate the output. The output can be a visual output, e.g. displayed on a screen of the vehicle, and/or an acoustic output, e.g. acoustic pulses, in particular of different frequencies, which are generated using e.g. a speaker or a speaker system of the vehicle.

In either case, a correct setup of the ultrasonic sensors and their connection to the processing device is important. This poses a big effort on installation of the ultrasonic sensors, e.g. a correct physical connection to the processing device and/or a correct logical assignment of the ultrasonic sensors to the processing device. The latter is in particular important, when the ultrasonic sensors are connected to the processing device via a communication bus, which is used by multiple devices. Such a bus can be particular for the ultrasonic monitoring system, so that the bus is only used by the respective ultrasonic sensors, or it can be a general bus, which is also used by further devices of the vehicle, which are independent from the ultrasonic monitoring system.

EP3454075A1 discloses an object-detection system calibration method and apparatus for vehicles. The document describes a system comprising multiple object-detection sensors positioned around a vehicle and a processing module configured to operate in a calibration mode. In this mode, the system detects a marker using the object-detection sensors, with each sensor generating an associated detection value. The processing module determines the position of each object-detection sensor relative to the vehicle based on these detection values.

DE102006012237B3 discloses a method and apparatus for determining sensor positions in a vehicle driver assistance system. The system comprises multiple sensor units connected in series via a data bus, each unit having a data input and output. A central control unit sequentially assigns unique identifications to the sensor units, wherein upon receiving an identification, each sensor unit activates its data output to enable communication with the subsequent unit. The position of each sensor unit is determined based on its position in the data bus chain and the sequence of identification assignment. Each sensor unit includes a switchable storage unit for storing the assigned identification. The system further comprises power supply lines and ground connections arranged in parallel with the data bus. However, DE102006012237B3 does not disclose how to determine the last sensor in a series without prior knowledge of the number of sensors.

US2019257676A1 discloses a sensor system interconnect for automatic configuration of sensors. The system comprises a plurality of sensors connected in a multi-drop shared connection network, wherein two of three wires are connected in a daisy chain fashion while the remaining wire is connected in series. Each sensor includes a sensing circuit and a one-wire interface for data transmission. Upon installation, the sensors automatically determine their respective positions through signal processing and data exchange between adjacent sensors. The first sensor may be determined by shorting its I/O pin to ground or power. Of particular significance is the communication between the ECU and the last sensor: when a sensor receives a "complete" signal from the ECU via its I/O pin, this indicates that this sensor is the last sensor in the series.

It is an object of the present invention to provide a method for initializing an ultrasonic monitoring system for a vehicle comprising multiple ultrasonic sensor arranged in a cascade and an ultrasonic monitoring system employing such a method, which enable which enable a simple installation of ultrasonic sensors in the ultrasonic monitoring system and a simple formation of the ultrasonic monitoring system employing multiple ultrasonic sensors.

This object is achieved by the independent claims. Advantageous embodiments are given in the dependent claims.

In particular, the present invention provides a method for initializing an ultrasonic monitoring system for a vehicle comprising multiple ultrasonic sensors arranged in a cascade, wherein the ultrasonic sensors comprise a supply voltage connector for connection to a DC supply line, a ground connector for connection to ground, an input communication line connector connected to a first segment of a communication line, in particular for monitoring reception of signals during initialization, and an output communication line connector connected to a second segment of the communication line, in particular for transmitting signals during initialization, and a connection unit for interconnecting the input communication line connector and the output communication line connector, comprising the steps of providing an initialization signal as master to a first ultrasonic sensor of the cascade of ultrasonic sensors, performing an initialization of the first ultrasonic sensor of the cascade of ultrasonic sensors as master, performing an initialization of a subsequent ultrasonic sensor of the cascade of ultrasonic sensors as slave based on an initialization message from the ultrasonic sensor initialized as master, wherein the connection unit interconnects the input communication line connector and the output communication line connector of the respective ultrasonic sensor initialized as slave, verifying, if the respective subsequent ultrasonic sensor of the cascade of ultrasonic sensors is a last ultrasonic sensor of the cascade of ultrasonic sensors, repeatedly performing the above steps of performing an initialization of a subsequent ultrasonic sensor of the cascade of ultrasonic sensors as slave and verifying, if the respective subsequent ultrasonic sensor of the cascade of ultrasonic sensors is a last ultrasonic sensor of the cascade of ultrasonic sensors, until the subsequent ultrasonic sensor is the last ultrasonic sensor of the cascade of ultrasonic sensors.

The present invention also provides an ultrasonic monitoring system for a vehicle comprising multiple ultrasonic sensors arranged in a cascade, wherein each of the multiple ultrasonic sensors comprises a supply voltage connector for connection to a DC supply line, a ground connector for connection to ground, an input communication line connector connected to a first segment of a communication line, in particular for monitoring reception of signals during initialization, an output communication line connector connected to a second segment of the communication line, in particular for transmitting signals during initialization, and a connection unit for interconnecting the input communication line connector and the output communication line connector, wherein the ultrasonic monitoring system is adapted to perform the above method.

The basic idea of the invention is to perform a simple initialization of all ultrasonic sensors of the ultrasonic monitoring system based on an initialization of one ultrasonic sensors as master, which then initializes all subsequent ultrasonic sensors of the cascade as slaves. This provides the ultrasonic monitoring system with a high degree of autonomy and flexibility. It is not required to provide the ultrasonic monitoring system with a given number of ultrasonic sensors, since the initialization can deal with the ultrasonic sensors of the cascade of ultrasonic sensors independently from the number of ultrasonic sensors. It is furthermore not required to assign positions to particular ultrasonic sensors. The assignment is implicitly given by the position of the ultrasonic sensors in the cascade as determined during initialization. Since the master initiates the initialization of the subsequent ultrasonic sensors as slaves in the same way, the entire method can be easily performed. As each ultrasonic sensor initialized as slave interconnects its input communication line connector and its output communication line connector only as part of the respective initialization, it is guaranteed that only the respective subsequent ultrasonic sensors, which is the next ultrasonic sensor to be initialized as slave, receives the initialization message and performs the initialization. Hence, the initialization of the entire ultrasonic monitoring system can be performed reliably even with the ultrasonic sensors not being initialized upon start of the method. Furthermore, since each of the ultrasonic sensors is powered individually, a high degree in freedom of design of the ultrasonic monitoring system is provided, so that for example any desired number of ultrasonic sensors can be combined in the ultrasonic monitoring system. Power handling is independent from the initialization as master or slave.

Preferably, the ultrasonic sensors of the ultrasonic monitoring system are functionally identical. Hence, each of the ultrasonic sensors can act as master or slave merely depending on the initialization. Each ultrasonic sensor can be used at any location within the cascade of ultrasonic sensors. The expression "functionally identical" refers to the ultrasonic sensors having the same hardware and software design. However, this comprises the case of ultrasonic sensors having e.g. different software versions but providing the same functionality.

In order to form the cascade of ultrasonic senses, the output communication line connector of each of the ultrasonic sensors is connected via a segment of the communication line to a subsequent ultrasonic sensor to form the cascade.

The ultrasonic monitoring system benefits from this design of the ultrasonic sensors, since it is easy to maintain and to repair. In case of failure of one of the ultrasonic sensors of the ultrasonic monitoring system, a single kind of ultrasonic sensors can be used to replace any of the ultrasonic sensors. Hence, it is not required to store different types of ultrasonic sensors, and each of the ultrasonic sensors can be provided at minimum costs. Once the initialization has been performed, the ultrasonic monitoring system comprises one ultrasonic sensor initialized as master and at least one ultrasonic sensor initialized as master, so that the ultrasonic monitoring system provides full autonomy in respect to usage in the vehicle. Furthermore, the ultrasonic monitoring system is rather cost efficient, since no additional processing device is required. In addition, a cost intensive integration into other electronic systems of the vehicle is not required. Still further, the ultrasonic monitoring system is highly flexible, since each of the ultrasonic sensors self-supplies with power.

Any number of ultrasonic monitoring systems can be used in the vehicle. Hence, one ultrasonic monitoring system can be provided with the ultrasonic sensors located at a front side of the vehicle and/or one ultrasonic monitoring system can be provided with the ultrasonic sensors located at a rear side of the vehicle, in particular integrated into respective front and/or rear bumpers of the vehicle. Hence, the ultrasonic monitoring system can be used by way of example to employ a parking assistance functionality. In the case of parking assistance, an output is generated depending on the distances to the objects in the surrounding.

Each ultrasonic sensor performs ultrasonic measurements to determine environment information in respect to the surrounding of the vehicle. The ultrasonic sensor emits ultrasonic pulses or sequences of ultrasonic pulses into the environment of the vehicle and receives reflections of these ultrasonic pulses from any kind of object in the surrounding. The reflections are processed in order to determine distances to these objects or even further information in respect to the surrounding of the vehicle.

The ultrasonic sensors of the ultrasonic monitoring system are arranged in a cascade. Such a cascade is also known in the Art as daisy chain. Each ultrasonic sensor is connected to one preceding ultrasonic sensor and/or one subsequent ultrasonic sensor, depending on its position in the cascade.

The supply voltage connector connects the respective ultrasonic sensor to the DC supply line. The DC supply line can provide a permanent DC supply, e.g. the DC supply line provides DC power when the vehicle is powered on, or the DC supply line can provide the DC supply merely when the ultrasonic monitoring system is to be used. In the latter case, the ultrasonic monitoring system is normally powered off and powered on upon usage. The DC supply line can provide a supply at e.g. a voltage level of a battery of the vehicle, which is typically 12V, 24V or 48V. In the future, also higher battery voltage levels can be used, e.g. with a voltage of up to 96V.

The ground connector connects the ultrasonic sensors to ground, which is preferably a common ground of the vehicle. Hence, power supply can be achieved with a single wire of the DC supply line. Ground is typically provided e.g. by a chassis of the vehicle without needs for wiring.

The input communication line connector and the output communication line connector can be single wire connectors, which is sufficient in case of a single wire communication line. In other cases, the input communication line connector and the output communication line connector can be multiline connectors.

The first segment of the communication line is a part of the communication line in direction towards the ultrasonic sensor initialized as master. The second segment of the communication line is a part of the communication line in direction away from the ultrasonic sensor initialized as master. The second segment of the communication line in respect to a particular ultrasonic sensor corresponds to the first segment of the communication line of a successive ultrasonic sensor. Hence, if not otherwise triggered to perform an initialization as master, the ultrasonic sensors can simply wait for reception of the initialization message at the input communication line connector.

The connection unit for interconnecting the input communication line connector and the output communication line connector can be e.g. a kind of switch, which is closed to interconnect the input communication line connector and the output communication line connector internally inside the ultrasonic sensor. However, the connection unit preferably comprises a pair of transcoders. One transcoder is connected to the input communication line connector and one transcoder connected to the output communication line connector. Each transcoder decodes messages received at the respective connector and codes messages to be sent via the respective connector. A communication between the two transcoders is enabled, when the interconnection there between is activated. The interconnection of the input communication line connector and the output communication line connector inside the ultrasonic sensors establishes the communication line of the ultrasonic monitoring system.

The input communication line connector and the output communication line connector are connectors for bi-directional communication of the ultrasonic sensor with preceding or subsequent ultrasonic sensors, respectively. However, during operation in the ultrasonic monitoring system, it can be sufficient to perform a communication in a direction from the master downwards along the cascade of the ultrasonic sensors.

The initialization signal can be any kind of suitable signal to initiate initialization of the respective ultrasonic sensor initialized as master. Apart from the initialization signal itself, no further information is required. The initialization signal can be received at any input connector of the respective ultrasonic sensor, including connectors suitable for input and output, i.e. bi-directional connectors. The initialization signal can be a logical voltage level or an initialization message coded according to a coding standard used for communication on the communication line.

The ultrasonic sensor initialized as master of the cascade performs a management task of the ultrasonic monitoring system. This enables a reliable common operation of all ultrasonic sensors of the ultrasonic monitoring system. Furthermore, the master can receive sensor information from the further ultrasonic sensors, i.e. from the ultrasonic sensors initialized as slaves, and process the sensor information. The sensor information can comprise raw data, e.g. data regarding the reflections of the ultrasonic pulses emitted by the ultrasonic sensors. Alternatively, the sensor information comprises information, which is based on a processing of the raw data by the respective ultrasonic sensor, e.g. information in respect of a closest object in the range of the respective ultrasonic sensor. The ultrasonic sensor initialized as master can also transmit sensor information corresponding to a sensor input via the communication line, in particular via the output communication line connector.

The ultrasonic sensors initialized as slaves transmit via the communication line sensor information corresponding to a respective sensor input. The respective sensor information is transmitted as a message coded according to a coding standard used for communication on the communication line. The sensor information from the ultrasonic sensors initialized as slaves can be transmitted via the input communication line connector or via the output communication line connector. Typically, the sensor information is transmitted in a downstream direction from the first ultrasonic sensor of the cascade of ultrasonic sensors towards the last ultrasonic sensor of the cascade.

The ultrasonic sensors of the ultrasonic monitoring system can comprise at least one additional connector, in particular as general purpose input and/or output connector. The additional connector can in general by any kind of input and/or output connector. Accordingly, the ultrasonic sensor can receive and/or transmit further information or signals. The additional connector can provide and/or receive a logical voltage level, e.g. to indicate activity. The additional connectors can be differently configured, e.g. in respect to chattering, which is relevant in case of a switch connected to the additional connector as input connector. General purpose input and/or output connectors enable a high degree of freedom in respect to connections of the ultrasonic sensor with a low number of additional connectors. In particular, the ultrasonic sensors, still further particular the ultrasonic sensor to be initialized as master, can receive the respective initialization signal via the additional connector. Hence, the ultrasonic sensors are adapted to perform the initialization as master upon reception of the initialization signal via one of the at least one additional connector. Accordingly, the input communication line connector, in particular of the ultrasonic sensor initialized as master, can be left unused, so that the respective ultrasonic sensor can be connected at its input communication line connector to a supervising control device.

The ultrasonic monitoring system is preferably provided to perform a communication via the communication line according to the LIN (Local Interconnect Network) standard. Hence, the input communication line connectors and the output communication line connectors of the ultrasonic sensors are provided as LIN-bus connectors for connection to a LIN-bus as communication line. LIN (Local Interconnect Network) is a serial network protocol used for communication between components in vehicles. It is a simple protocol, that can be easily implemented. LIN can be implemented with a single wire.

According to a modified embodiment of the invention, providing an initialization signal as master to a first ultrasonic sensor of the cascade of ultrasonic sensors comprises providing the initialization signal from a supervising control device to the input communication line connector of the first ultrasonic sensor. The initialization signal from the supervising control device, e.g. a LIN node, can be a simple voltage level or an initialization message sent from the supervising control device. The supervising control device transmits e.g. upon power on, the initialization signal to the first ultrasonic sensor of the cascade, which becomes the master. The ultrasonic sensor initialized as master then starts the initialization of the further ultrasonic sensors as slaves via the connection line.

According to a modified embodiment of the invention, providing an initialization signal as master to a first ultrasonic sensor of the cascade of ultrasonic sensors comprises providing the initialization signal as logical voltage level at an input connector of the first ultrasonic sensor, in particular at the input communication line connector of the first ultrasonic sensor. The logical voltage level as initialization signal is preferably a high voltage level. This is a very simple means to start an initialization of the respective ultrasonic sensor initialized as master. This is in particular important, when the ultrasonic monitoring system is a stand-alone ultrasonic monitoring system, i.e. when the cascade of ultrasonic sensors is not connected to a **LIN** node. In this case, the logical voltage level can be easily provided e.g. from a supply voltage of the vehicle. The logical voltage level can be provided in general to any suitable connector of the ultrasonic sensor suitable to detect the logical voltage level, e.g. the input communication line connector or a general purpose input and/or output connector.

Preferably, the ultrasonic monitoring system comprises a switching device, in particular a reverse gear switching device operated when putting the vehicle in reverse driving mode and/or a user operated switching device. In either case, the switching device is connected between the DC supply line and an input connector of a first ultrasonic sensor of the cascade of ultrasonic sensors. Hence, the ultrasonic sensor to be initialized as master receives the voltage level of the DC supply line as initialization signal. The switching device can be coupled to a driving direction of the vehicle, so that the ultrasonic monitoring system is activated e.g. when the vehicle is in backward driving operation. In vehicles having a gear box, the switching device can be coupled to an operation of the gear box, i.e. to activation of the reverse gear. The reverse gear can be activated either manually or automatically. When the reverse gear is activated manually, it is preferred that the respective input connector can deal with a long contact bounce. Alternatively or additionally, the user operated switching device can provide the voltage level of the DC supply line as initialization signal, so that the ultrasonic monitoring system is activated as desired by the user of the vehicle e.g. independently from an activation of the reverse gear. The user operated switching device typically requires that the respective input connector can deal with a shorter contact bounce compared to the switching device coupled to the manual activation of the reverse gear. Contact bounce, also referred to as chatter, is a common problem with mechanical switches, which arises as the result of electrical contact resistance (ECR) phenomena at interfaces. Switch contacts are usually made of springy metals. When the contacts strike together, their momentum and elasticity act together to cause them to bounce apart one or more times before making steady contact. The result is a rapidly pulsed electric current instead of a clean transition from zero to full current.

According to a modified embodiment of the invention, the step of performing an initialization of the subsequent ultrasonic sensor of the cascade of ultrasonic sensors as slave based on an initialization message from the ultrasonic sensor initialized as master comprises the steps of transmitting the initialization message from the output communication line connector of the ultrasonic sensor initialized as master to the input communication line connector of the respective subsequent ultrasonic sensor of the cascade of ultrasonic sensors, and transmitting an initialization response from the input communication line connector of the respective subsequent ultrasonic sensor of the cascade of ultrasonic sensors to the output communication line connector of the ultrasonic sensor initialized as master. Accordingly, initialization of the ultrasonic sensors as slaves is based on a bi-directional communication between the ultrasonic sensors. This enables a reliable initialization of all of the ultrasonic sensors and thereby of the entire ultrasonic monitoring system.

According to a modified embodiment of the invention, the method comprises an additional step of assigning a preset address to each of the ultrasonic sensors of the cascade of ultrasonic sensors, in particular upon power-on of the ultrasonic sensors of the cascade of ultrasonic sensors, and performing an initialization of a subsequent ultrasonic sensor of the cascade of ultrasonic sensors as slave based on an initialization message from the ultrasonic sensor initialized as master comprises assigning a unique address to the respective subsequent ultrasonic sensor of the cascade of ultrasonic sensors. The preset address can be configured during power-on of the respective ultrasonic sensor, e.g. a default address. The address can be an address reserved for not yet initialized ultrasonic sensors. Accordingly, each ultrasonic sensors having this address knows that it has to wait for initialization, either as master or as slave. The unique address can be provided to the respective subsequent ultrasonic sensor during initialization. The ultrasonic sensor initialized as master can maintain the preset address as master address. Alternatively, also a unique address is assigned to the ultrasonic sensor initialized as master.

According to a modified embodiment of the invention, the step of assigning a unique address to the respective subsequent ultrasonic sensor of the cascade of ultrasonic sensors comprises transmitting the unique address from the ultrasonic sensor initialized as master to the respective subsequent ultrasonic sensor of the cascade of ultrasonic sensors. Hence, the ultrasonic sensor initialized as master performs full control of the assignment of the unique addresses of the ultrasonic sensors initialized as slaves. The unique address can already be assigned with the initialization message or afterwards in a further message.

According to a modified embodiment of the invention, the step of assigning a unique address to the respective subsequent ultrasonic sensor of the cascade of ultrasonic sensors comprises assigning the address within the respective subsequent ultrasonic sensor of the cascade of ultrasonic sensors upon reception of the initialization message. Hence, each of the ultrasonic sensors initialized as slaves defines its unique address based on the respective initialization message. The unique address can be a random address taken from a sufficiently large address space. Alternatively, each ultrasonic sensor is already equipped with a unique address, and uses this address. Furthermore, the unique address can be derived from any piece of information included in the initialization message. In addition, the unique address can be verified by the ultrasonic sensor initialized as master in respect to possible collisions.

According to a modified embodiment of the invention, transmitting the initialization message as slave from the output communication line connector of the ultrasonic sensor initialized as master to the input communication line connector of the respective subsequent ultrasonic sensor of the cascade of ultrasonic sensors comprises passing the initialization message as slave through at least one ultrasonic sensor of the cascade of ultrasonic sensors, which has already been initialized as slave, and transmitting an initialization response from the input communication line connector of the respective subsequent ultrasonic sensor of the cascade of ultrasonic sensors to the output communication line connector of the master comprises passing the initialization response through at least one ultrasonic sensor of the cascade of ultrasonic sensors, which has already been initialized as slave. Hence, after the initialization, all ultrasonic sensors initialized as slave forward messages not directed to them in both directions, i.e. from the input communication line connector to the output communication line connector or from the output communication line connector to the input communication line connector. This refers to the initialization as well as to normal operation of the ultrasonic monitoring system.

According to the invention, verifying, if the respective subsequent ultrasonic sensor of the cascade of ultrasonic sensors is a last ultrasonic sensor of the cascade of ultrasonic sensors comprises verifying a connection of an output device to the respective subsequent ultrasonic sensor of the cascade of ultrasonic sensors, in particular verifying a connection of the output device to the output communication line connector of the respective subsequent ultrasonic sensor. Hence, the respective subsequent ultrasonic sensor determines during as part of its initialization an existing connection to the output device, so that it can report this information in an initialization response to the ultrasonic sensor initialized as master. In case the respective subsequent ultrasonic sensor currently being initialized as slave determines, that the output device is connected, it includes this information in its response to the ultrasonic sensor initialized as master. Hence, the ultrasonic sensor initialized as master directly knows that no further ultrasonic sensor is connected and stops the initialization. The detection of the output device directly indicates that the ultrasonic sensor currently being initialized as slave is the last ultrasonic sensor of the cascade of ultrasonic sensors. Furthermore, also the respective subsequent ultrasonic sensor currently being initialized as slave knows about the connection of the output device, so that it can use the output device without further configuration. The determination of an existing connection to the output device can be performed e.g. applying a test voltage level to the respective output connector to verify its impedance, in particular to the output communication line connector. If the test voltage level does not change, the respective output connector is not further connected. Otherwise, if the voltage level performs a characteristic voltage drop, this can indicate a connection to the output device. The output device is preferably a piezo buzzer.

According to a modified embodiment of the invention, verifying, if the respective subsequent ultrasonic sensor of the cascade of ultrasonic sensors is a last ultrasonic sensor of the cascade of ultrasonic sensors, comprises applying a timeout for reception of an initialization response in respect to the initialization message. Hence, the ultrasonic sensor initialized as master fully controls the initialization of the other ultrasonic sensors and thereby the initialization of the entire ultrasonic monitoring system. When the ultrasonic sensor initialized as master determines that no further ultrasonic sensor responds to its initialization message, it is supposed that all ultrasonic sensors of the cascade have already been initialized, so that no further initialization is required.

According to a modified embodiment of the invention, the method comprises an additional step of determining a number of ultrasonic sensors initialized as slaves connected to the ultrasonic sensor initialized as master based on the number of initializations of subsequent ultrasonic sensors of the cascade of ultrasonic sensors initialized as slave. Depending on the details of the initialization process, the ultrasonic sensor initialized as master can determine this information in different ways. For example, the ultrasonic sensor initialized as master can merely count a number of responses received from the subsequent ultrasonic sensors upon their initialization as slaves. However, also other ways of determining the number of ultrasonic sensors initialized as slaves can be performed.

According to a modified embodiment of the invention, the method comprises an additional step of selecting an appropriate measurement scheduler for the ultrasonic sensors of the ultrasonic monitoring system based on the number of ultrasonic sensors initialized as slaves connected to the ultrasonic sensor initialized as master. Since the number of ultrasonic sensors can be different for different ultrasonic monitoring systems, it is required to set-up the ultrasonic sensors of the ultrasonic monitoring system. The scheduling can refer to a scheduling of the emission of ultrasonic pulses from the different ultrasonic sensors. Hence, interferences of ultrasonic pulses of adjacent ultrasonic sensors can be avoided. In particular, interferences of the reflections of the ultrasonic pulses of adjacent ultrasonic sensors can be avoided. Furthermore, the emission of ultrasonic pulses from the different ultrasonic sensors can be scheduled to synchronize a common operation of multiple ultrasonic sensors, e.g. when reflections of ultrasonic pules emitted with one ultrasonic sensor are to be received and processed by at least one adjacent ultrasonic sensor. This enables a more detailed localization of objects in the surrounding of the vehicle. The scheduling can further refer to a scheduling of the usage of the communication line by the ultrasonic sensors. Since the number of the ultrasonic sensors can be different, the scheduling enables an efficient usage of the communication line for all numbers and configurations of the ultrasonic sensors in the ultrasonic monitoring system.

According to a modified embodiment of the invention, the ultrasonic monitoring system comprises a status indicator device connected to an output connector of one of the ultrasonic sensors, in particular connected to an output connector of a last ultrasonic sensor initialized slave of the cascade of ultrasonic sensors. The status indicator device can be a simple lighting device, which is lit when the ultrasonic monitoring system is active or being activated/deactivated. Alternatively or additionally, the status indicator device can comprise an acoustic output device, which generates a sound when the ultrasonic monitoring system is active or activated/deactivated. Preferably, a general purpose connector of the respective ultrasonic sensor is used as output connector, so that the status indicator device can e.g. be driven and powered via the general purpose connector.

According to the invention, the ultrasonic monitoring system comprises an output device connected to the output communication line connector of the last ultrasonic sensor of the cascade of ultrasonic sensors. Hence, the output device can be connected directly to one of the ultrasonic sensors of the ultrasonic monitoring system. No additional processing is required in order to generate an output in respect to the sensor information from the ultrasonic sensors of the ultrasonic monitoring system, which enables provisioning the ultrasonic monitoring system as fully autonomous system. The communication line can be limited to the connection of the ultrasonic sensors to each other and to the output device, so that interactions with other devices on the communication line can be avoided. No further devices are connected to the communication line. Hence, the ultrasonic monitoring system can be implemented independently from other devices of the vehicle, which reduces the risk of problems arising from multiple devices interoperating with each other on the same communication line.

According to the invention, the last ultrasonic sensor of the cascade of ultrasonic sensors is connected to the output device to generate an output corresponding to the sensor information received from the ultrasonic sensors of the cascade, i.e. the output can be generated based on the sensor information from any of the preceding ultrasonic sensors in the cascade. The output device can be e.g. an acoustical output device, e.g. a speaker or a piezo-buzzer, which is directly controlled by the respective ultrasonic sensor by generating signal pulses at the output communication line connector. Hence, by way of example, the ultrasonic sensors can comprise an output switch, which can internally interconnect the output communication line connector e.g. via the ground connector to ground or via the supply voltage connector to the DC supply line, and the output device e.g. as piezo buzzer can be connected to the output communication line connector and the DC supply line or ground, respectively. In this case, the last ultrasonic sensor can actuate the output switch to generate the signal pulses to operate the piezo buzzer. However, in an alternative or additional embodiment, the ultrasonic sensor initialized as last slave can be adapted to transmit the output signal to a control device of the vehicle to generate e.g. a visual output of the sensor signals of the ultrasonic sensors of the cascade. In both cases, no additional connectors are required. In a further alternative embodiment, the output signal is transmitted via a different connector of the ultrasonic sensor, e.g. a general purpose input and/or output (GPIO).

These and other aspects of the invention will be apparent from and elucidated with reference to the embodiments described hereinafter. Individual features disclosed in the embodiments can constitute alone or in combination an aspect of the present invention. Features of the different embodiments can be carried over from one embodiment to another embodiment.

In the drawings:

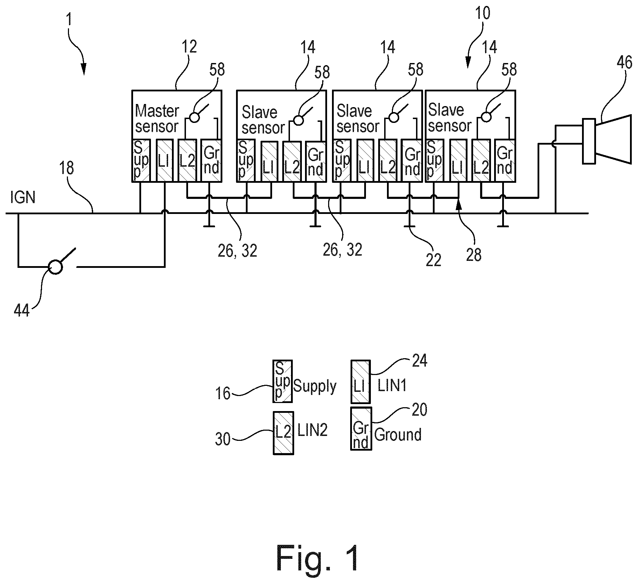

- Fig. 1: shows a schematic view of an ultrasonic monitoring system with one cascade of four ultrasonic sensors, one of which is initialized as master and the rest of the ultrasonic sensors initialized as slaves, with a switching device for initializing the master and a piezo buzzer as output device, according to a first, preferred embodiment,

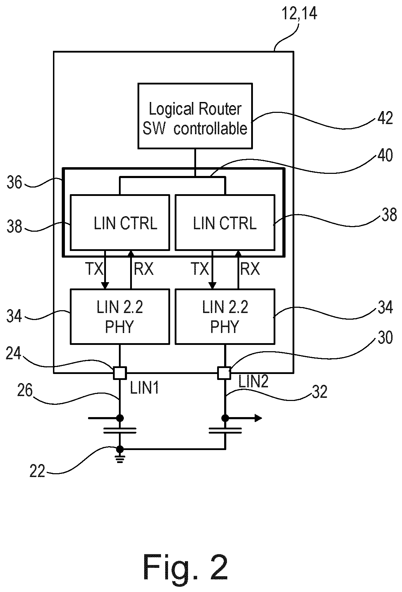

- Fig. 2: shows a schematic view of an ultrasonic sensor of the ultrasonic monitoring system of Fig. 1 with physical LIN drivers, a connection unit and a logical router according to the first embodiment,

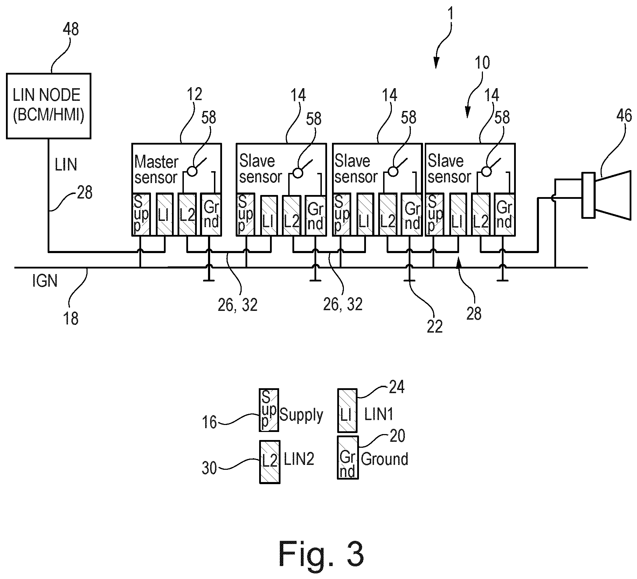

- Fig. 3: shows a schematic view of an ultrasonic monitoring system with one cascade of four ultrasonic sensors, one of which is initialized as master and the rest of the ultrasonic sensors initialized as slaves, whereby the master is connected to a superior processing unit for initializing the master, and the ultrasonic monitoring system comprises a piezo buzzer as output device, according to a second embodiment,

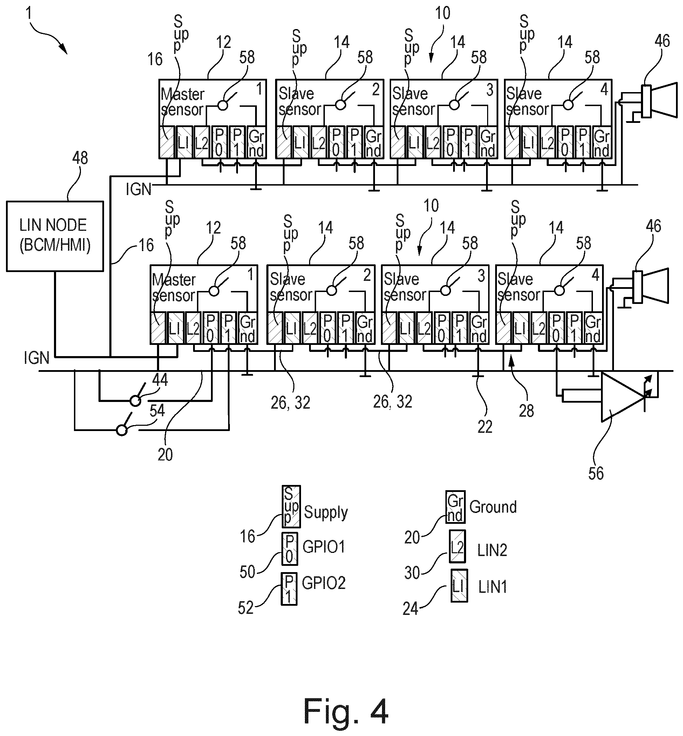

- Fig. 4: shows a schematic view of an ultrasonic monitoring system with two identical cascades of four ultrasonic sensors, one of which is initialized as master and the rest of the ultrasonic sensors initialized as slaves, whereby each master is connected to a superior processing unit for initializing the master, and the ultrasonic monitoring system comprises a buzzer for each cascade as output device, according to a third embodiment, and

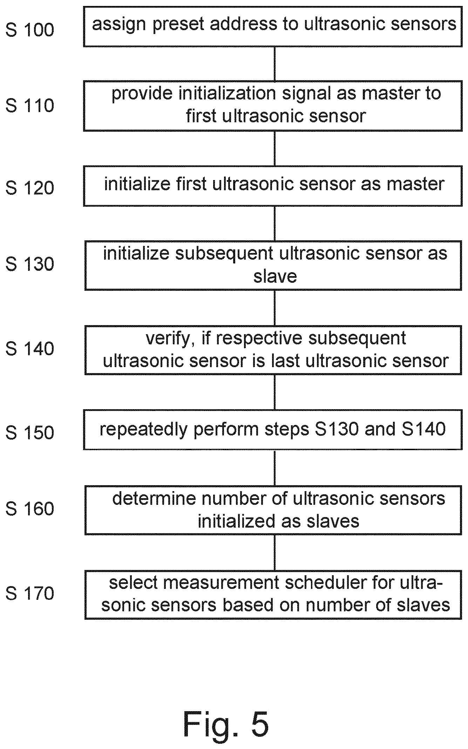

- Fig. 5: is a flow chart depicting a method for initializing any of the ultrasonic monitoring systems of figures 1, 3, and 4

Figure 1 shows an ultrasonic monitoring system 1 for a vehicle according to a first, preferred embodiment. The ultrasonic monitoring system 1 of the first embodiment is an autonomous system, which employs an ultrasonic park assist system (UPA).

The ultrasonic monitoring system 1 comprises a cascade 10 of multiple ultrasonic sensors 12, 14, which are provided as functionally identical ultrasonic sensors 12, 14. Such a cascade 10 is also known in the Art as daisy chain. In this embodiment, the ultrasonic monitoring system 1 comprises four ultrasonic sensors 12, 14, which are in this embodiment by way of example integrated into a bumper at a rear side of the vehicle. Hence, the ultrasonic monitoring system 1 of the first embodiment employs a parking assistance functionality in respect to the rear side of the vehicle to generate warnings in respect to objects located in the surrounding of the vehicle.

One of the ultrasonic sensors 12, 14 shown by way of example in figure 2, which only provides a partial view of the ultrasonic sensor 12, 14. The ultrasonic sensor 12, 14 performs ultrasonic measurements to determine environment information in respect to the surrounding of the vehicle. Hence, the ultrasonic sensors 12, 14 emit ultrasonic pulses into the environment of the vehicle and receive reflections of the ultrasonic pulses from different kinds of objects in the surrounding. The reflections are processed in order to determine distances to these objects or to determine even further information in respect to the surrounding of the vehicle. This sensor information is provided for further processing in the ultrasonic monitoring system 1.

Each of the ultrasonic sensors 12, 14 comprises a supply voltage connector 16 for connection to a DC supply line 18 as well as a ground connector 20 for connection to ground 22 of the vehicle. The DC supply line 18 provides a permanent DC supply, e.g. the DC supply line 18 provides DC power when the vehicle is powered on. The DC supply line 18 provides a supply at a voltage level of a battery of the vehicle, which is typically 12V, 24V or 48V.

Each of the ultrasonic sensors 12, 14 further comprises an input communication line connector 24 for connecting to a first segment 26 of a communication line 28 and an output communication line connector 30 for connecting to a second segment 32 of the communication line 28. The first segment 26 of the communication line 28 with respect to one of the ultrasonic sensors 12, 14 corresponds to the second segment 32 of the communication line 28 of a respectively previous one of the ultrasonic sensors 12, 14. Hence, the output communication line connector 30 of each of the ultrasonic sensors 12, 14 is connected via a respective segment 26, 32 of the communication line 28 to a subsequent ultrasonic sensor 12, 14 to form the cascade 10. Accordingly, each ultrasonic sensor 12, 14 is connected to one preceding ultrasonic sensor 12, 14 and/or to one subsequent ultrasonic sensor 12, 14, depending on its position in the cascade 10.

According to the first embodiment, the input communication line connector 24 and the output communication line connector 30 are provided as LIN-bus connectors for connection to a LIN-bus as communication line 28. LIN (Local Interconnect Network) is a serial network protocol used for communication between components in vehicles. It is a simple protocol, that can be easily implemented using a single wire. Hence, the input communication line connector 24 and the output communication line connector 30 are single wire connectors.

As can be further seen in figure 2, each of the ultrasonic sensors 12, 14 comprises two physical drivers 34, which are provided at the input communication line connector 24 and the output communication line connector 30. The physical drivers 34 receive and decode electrical signals on the communication line 28.

Each of the ultrasonic sensors 12, 14 further comprises a connection unit 36 for interconnecting its input communication line connector 24 with its output communication line connector 30, as can be seen in figure 2. In detail, the connection unit 36 is connected to the two physical drivers 34. The connection unit 36 comprises a pair of transcoders 38. One transcoder 38 is connected to the input communication line connector 24 via the respective physical driver 34, and the other transcoder 38 is connected to the output communication line connector 30 via the respective physical driver 34. Each transcoder 38 decodes messages received at the respective connector 24, 30 and codes messages sent via the respective connector 24, 30. The two transcoders 38 are connected via internal bus connection 40. A logical router 42 controls the operation of the transcoders 38 of the connection unit 36.

As can be further seen in figure 1, the ultrasonic monitoring system 1 comprises a switching device 44, which is in this embodiment a reverse gear switch 44 operated when putting the vehicle in reverse driving mode. Hence, the reverse gear switch 44 is coupled to an operation of the gear box, i.e. to an activation of the reverse gear. The reverse gear switch 44 is connected between the DC supply line 18 and the input communication line connector 24. Hence, when reverse gear switch 44 is closed, a voltage level of the DC supply line 18 is provided at the input communication line connector 24 of a first ultrasonic sensor 12, 14 of the cascade 10 of ultrasonic sensors 12, 14.

The ultrasonic monitoring system 1 also comprises an output device 46 connected to an output communication line connector 30 of the last ultrasonic sensor 14 of the cascade 10 of ultrasonic sensors 12, 14, which is initialized as slave, as discussed below. The output device 46 is a piezo buzzer 46 in this embodiment. The piezo buzzer 46 is connected to the output communication line connector 30 and the DC supply line 18. The piezo buzzer 46 is driven by signal pulses generated by the last ultrasonic sensor 14 of the cascade 10 of ultrasonic sensors 12, 14 at the output communication line connector 30. Accordingly, the ultrasonic sensors 12, 14 comprise an output switch 58, which can internally interconnect the output communication line connector 30 via the ground connector 20 to ground 22. The last ultrasonic sensor 14 of the cascade 10 of ultrasonic sensors 12, 14 actuates its output switch 58 to generate the signal pulses to operate the piezo buzzer via the output communication line connector 30.

Each of the ultrasonic sensors 12, 14 can be used as master or slave depending on a respective initialization. Therefore, the ultrasonic sensors 12, 14 can be used independently at any position in the cascade 10.

Subsequently, a method for initializing the ultrasonic monitoring system 1 with the ultrasonic sensors 12, 14 will be described with additional reference to figure 5.

The method starts with step S100, which refers to assigning a preset address to each of the ultrasonic sensors 12, 14 of the cascade 10 of ultrasonic sensors 12, 14 upon power-on of the ultrasonic sensors 12, 14. The preset address in this embodiment is a default address, which is reserved for not yet initialized ultrasonic sensors 12, 14. Accordingly, each ultrasonic sensor 12, 14 having this address knows that it has to wait for initialization, either as master or as slave.

Step S110 refers to providing an initialization signal as master to a first ultrasonic sensor 12 of the cascade 10 of ultrasonic sensors 12, 14. According to the first embodiment, the initialization signal is provided as logical voltage level at the input communication line connector 24 of the first ultrasonic sensor 12. The logical voltage level as initialization signal is a high voltage level. Hence, when the vehicle is to be moved in a rear direction, the reverse gear is selected and the reverse gear switch 44 is operated to close, so that the first ultrasonic sensor 12 receives a logical voltage level of the DC supply line 18 as initialization signal to start an initialization as master.

This initialization signal is in particular important, when the ultrasonic monitoring system 1 is a stand-alone ultrasonic monitoring system 1.

Step S120 refers to performing an initialization of the first ultrasonic sensor 12 of the cascade 10 of ultrasonic sensors 12, 14 as master. The ultrasonic sensor 12 initialized as master controls the cascade 10. Hence, the ultrasonic sensor 12 initialized as master of the cascade 10 of ultrasonic sensors 12, 14 performs a management task of the ultrasonic monitoring system 1, as discussed below in more detail. According to the first embodiment, in case of the ultrasonic sensor 12 initialized as master, the connection unit 36 does not interconnect the input communication line connector 24 and the output communication line connector 30. Furthermore, the ultrasonic sensor 12 initialized as master can receive sensor information from the further ultrasonic sensors 14, i.e. from the ultrasonic sensors 14 initialized as slaves as discussed below, and process the sensor information. The sensor information can comprises raw data, e.g. data regarding the reflections of the ultrasonic pulses emitted by the ultrasonic sensors 12, 14. Alternatively, the sensor information comprises information, which is based on a processing of the raw data by the respective ultrasonic sensor 12, 14, e.g. information in respect of a closest object in the range of the respective ultrasonic sensor 12, 14. The ultrasonic sensor 12 initialized as master can also transmit sensor information corresponding to sensor input via the communication line 28, in particular via the output communication line connector 30.

Step S130 refers to performing an initialization of a subsequent ultrasonic sensor 14 of the cascade 10 of ultrasonic sensors 12, 14 as slave based on an initialization message from the ultrasonic sensor 12 initialized as master. Hence, the initialization message is transmitted from the output communication line connector 30 of the ultrasonic sensor 12 initialized as master to the input communication line connector 24 of a respective subsequent ultrasonic sensor 14 of the cascade 10 of ultrasonic sensors 12, 14, which is to be initialized as slave. The subsequent ultrasonic sensor 14, which is to be initialized as slave, receives the initialization message at its input communication line connector 24 and initializes itself as slave. This includes that connection unit 36 internally interconnects its input communication line connector 24 and its output communication line connector 30, so that a communication between the two transcoders 38 is enabled, thereby enabling bi-directional communication of the ultrasonic sensor 14 initialized as slave with preceding and/or subsequent ultrasonic sensors 12, 14 via each of the input communication line connector 24 and the output communication line connector 30, respectively.

Upon reception of the initialization message, the respective subsequent ultrasonic sensor 14 being initialized as slave determines a unique address, e.g. based on any piece of information included in the initialization message, and assigns this unique address to itself. Alternatively, the unique address can be a random address taken from a sufficiently large address space, or each ultrasonic sensor 14 being initialized as slave is already equipped with a unique address, a factory address similar to a MAC address of a network device, and uses this unique address.

The ultrasonic sensor 14 being initialized as slave then transmits an initialization response from its input communication line connector 24 to the output communication line connector 30 of the ultrasonic sensor 12 initialized as master via the communication line 28. The initialization response includes the unique address, which is verified by the ultrasonic sensor 12 initialized as master in respect to possible collisions.

Step S140 refers to verifying, if the respective subsequent ultrasonic sensor 14 of the cascade 10 of ultrasonic sensors 12, 14 is a last ultrasonic sensor 12, 14 of the cascade 10 of ultrasonic sensors 12, 14. Hence, a connection of the output device 46 to the respective ultrasonic sensor 14 is verified. This refers according to the first embodiment to verifying a connection of the output device 46 to the output communication line connector 30 of the respective subsequent ultrasonic sensor 14. According to the invention, the respective subsequent ultrasonic sensor 14 being initialized as slave determines an existing connection to the output device 46 and reports this information in the initialization response or a further message to the ultrasonic sensor 12 initialized as master. The determination of an existing connection to the output device 46 is performed e.g. applying a test voltage level to the output communication line connector 30 to verify its impedance. If the test voltage level does not change, the respective output connector is not further connected or connected to a further ultrasonic sensor 12, 14. Otherwise, if the voltage level performs a characteristic voltage drop, this can indicate a connection to the output device 46.

The detection of the output device 46 connected to the output communication line connector 30 directly indicates that the respective subsequent ultrasonic sensor 14 currently being initialized as slave is the last ultrasonic sensor 12, 14 of the cascade 10 of ultrasonic sensors 12, 14. Hence, the ultrasonic sensor 14 currently being initialized as slave knows about the connection of the output device 46 and can use the output device 46 without further configuration.

Step S150 refers to repeatedly performing the above steps of performing an initialization of a respective subsequent ultrasonic sensor 14 of the cascade 10 of ultrasonic sensors as slave, as specified in step S130, and verifying, if the respective subsequent ultrasonic sensor 12, 14 of the cascade 10 of ultrasonic sensors 12, 14 is a last ultrasonic sensor 12, 14 of the cascade 10 of ultrasonic sensors 12, 14, as specified in step S 140. Accordingly, steps S130 and S140 are repeated, until the respective subsequent ultrasonic sensor 12, 14 is the last ultrasonic sensor 12, 14 of the cascade 10 of ultrasonic sensors 12, 14.

Hence, the ultrasonic sensor 12 initialized as master starts an initialization of the remaining ultrasonic sensors 14 as slaves as discussed above in respect to the ultrasonic sensor 12, 14 subsequent to the ultrasonic sensor 12 initialized as master. The ultrasonic sensor 12 initialized as master sends the initialization message to the respective subsequent ultrasonic sensor 14 initialized as slave, and the initialization message is forwarded through all ultrasonic sensors 14, which have already been initialized as slaves, until an ultrasonic sensor 12, 14 not yet initialized receives the initialization message and performs the respective initialization. This procedure is repeated, until the last ultrasonic sensor 12, 14 of the cascade 10 determines during the initialization, that it is the last ultrasonic sensor 12, 14 of the cascade 10. This information is included in the confirmation signal to the ultrasonic sensor 12 initialized as master.

Accordingly, the initialization message as slave is passed through all ultrasonic sensors 14 of the cascade 10 of ultrasonic sensors 12, 14, which have already been initialized as slaves. Similarly, the initialization response is passed through all ultrasonic sensors 14 of the cascade 10 of ultrasonic sensors 12, 14, which have already been initialized as slaves.

After the initialization, all ultrasonic sensors 14 initialized as slaves forward messages not directed to them in both directions, i.e. from the input communication line connector 24 to the output communication line connector 30 or from the output communication line connector 30 to the input communication line connector 24. This includes initialization as well as normal operation of the ultrasonic monitoring system 1.

Step S160 refers to determining a number of ultrasonic sensors 14 initialized as slaves, which are connected to the ultrasonic sensor 12 initialized as master, based on the number of initializations of subsequent ultrasonic sensors 14 of the cascade 10 of ultrasonic sensors 12, 14 initialized as slave. In this embodiment, the ultrasonic sensor 12 initialized as master determines this information by counting a number of initialization responses received from the respective subsequent ultrasonic sensors 14 upon their initialization as slaves.

Step S170 refers to selecting an appropriate measurement scheduler for the ultrasonic sensors 12, 14 of the ultrasonic monitoring system 1 based on the number of ultrasonic sensors 14 initialized as slaves, which are connected to the ultrasonic sensor 12 initialized as master. The scheduling refers to a scheduling of the emission of ultrasonic pulses from the different ultrasonic sensors 12, 14 to avoid interferences of ultrasonic pulses of adjacent ultrasonic sensors 12, 14. Furthermore, the emission of ultrasonic pulses from the different ultrasonic sensors 12, 14 can be scheduled to synchronize a common operation of multiple ultrasonic sensors 12, 14, e.g. when reflections of ultrasonic pules emitted with one ultrasonic sensor 12, 14 are to be received by at least one adjacent ultrasonic sensor 12, 14. The scheduling further refers to a scheduling of the usage of the communication line 28 by the ultrasonic sensors 12, 14.

After this initialization, the ultrasonic monitoring system 1 switches normal operation. The ultrasonic sensors 14 initialized as slaves transmit via the communication line 28 sensor information corresponding to their sensor input. The respective sensor information is transmitted as a message coded according to the coding standard used for communication on the communication line 28. The sensor information from the ultrasonic sensors 14 initialized as slaves is transmitted via the input communication line connector 24 or via the output communication line connector 30, i.e. in an upstream direction towards the ultrasonic sensor 12 initialized as master or in a downstream direction towards the last ultrasonic sensor 14 of the cascade 10 of ultrasonic sensors 12, 14, which is initialized as slave.

The last ultrasonic sensor 14 initialized as slave transmits the output signal via its output communication line connector 30 to the output device 46. The output corresponds to the sensor information received from the ultrasonic sensors 12, 14 of the cascade 10, i.e. the output is generated based on sensor information from any of the preceding ultrasonic sensors 12, 14 of the cascade 10. The output device 46 is directly controlled by the last ultrasonic sensor 12, 14 of the cascade 10 by generating signal pulses at the output communication line connector 30, which correspond to acoustic signals of the output device 46. In particular, as discussed above, the piezo buzzer 46 is driven by signal pulses generated by the last ultrasonic sensor 14 of the cascade 10 of ultrasonic sensors 12, 14 at the output communication line connector 30 using the output switch 58, which internally interconnects the output communication line connector 30 via the ground connector 20 to ground 22. Hence, for the present ultrasonic park assist system, the output comprises acoustic signals depending on distances to the objects in the surrounding of the vehicle.

Figure 3 shows an ultrasonic monitoring system 1 for a vehicle according to a second embodiment. The ultrasonic monitoring system 1 of the second embodiment also employs an ultrasonic park assist system (UPA). The ultrasonic monitoring system 1 of the second embodiment is based on the ultrasonic monitoring system 1 of the first embodiment. Hence, the subsequent description of the ultrasonic monitoring system 1 of the second embodiment concentrates on the description of differences between the ultrasonic monitoring systems 1 of the first and second embodiment.

Also the ultrasonic monitoring system 1 of the second embodiment comprises a cascade 10 of four ultrasonic sensors 12, 14, which are provided as functionally identical ultrasonic sensors 12, 14. Each of the ultrasonic sensors 12, 14 of the second embodiment has essentially the same design as the ultrasonic sensors 12, 14 of the first embodiment. Merely the operation for initializing the ultrasonic sensor 12 as master slightly differs from the first embodiment.

In contrast to the ultrasonic monitoring system 1 of the first embodiment, the ultrasonic monitoring system 1 of the second embodiment does not comprise a switching device 44. Instead, the input communication line connector 24 of the first ultrasonic sensor 12, 14 of the cascade 10 of ultrasonic sensors 12, 14 is connected via the communication line 28 to a LIN node 48, which is a supervising control device. The LIN node 48 can be e.g. a body controller module (BCN) or a human machine interface (HMI).

The ultrasonic monitoring system 1 of the second embodiment comprises an output device 46 in-line with the ultrasonic monitoring system 1 of the first embodiment.

Also operation of the ultrasonic monitoring system 1 of the second embodiment is essentially identical to the operation of the ultrasonic monitoring system 1 of the first embodiment.

Merely step S110 referring to provisioning of the initialization signal to the first ultrasonic sensor 12 to be initialized as master differs from the method of the first embodiment. According to the second embodiment, the initialization signal as master is provided from the supervising control device 48 to the input communication line connector 24 of the first ultrasonic sensor 12 to be initialized as master. The initialization signal from the supervising control device 48 is an initialization message sent from the supervising control device 48. The supervising control device 48 transmits e.g. upon power on, the initialization message to the first ultrasonic sensor 12 of the cascade, which is initialized as master. The ultrasonic sensor 12 initialized as master then starts the initialization of the further ultrasonic sensors 14 as slaves via the connection line 28 as discussed with respect to the first embodiment.

In addition, the ultrasonic sensor 12 initialized as master interconnects its input communication line connector 24 and its output communication line connector 30 via its connection unit 36 during initialization. Hence, a communication between the two transcoders 38 is enabled, thereby enabling bi-directional communication of the ultrasonic sensor 12 initialized as master with the LIN node 48 and subsequent ultrasonic sensors 14 initialized as slave.

Figure 4 shows an ultrasonic monitoring system 1 for a vehicle according to a third embodiment. The ultrasonic monitoring system 1 of the third embodiment also employs an ultrasonic park assist system (UPA). The ultrasonic monitoring system 1 of the third embodiment is based on the ultrasonic monitoring systems 1 of the first and second embodiments. Hence, the subsequent description of the ultrasonic monitoring system 1 of the third embodiment concentrates on the description of differences between the ultrasonic monitoring systems 1 of the first and second embodiment compared to that of the third embodiment.

The ultrasonic monitoring system 1 of the third embodiment comprises two cascades 10 of four ultrasonic sensors 12, 14 each. The two cascades 10 of ultrasonic sensors 12, 14 are connected with the respective first ultrasonic sensor 12, 14 via the communication line 28 to each other. Furthermore, the two cascades 10 of ultrasonic sensors 12, 14 are connected via the communication line 28 to a LIN node 48, as already discussed above in respect to the second embodiment.

The ultrasonic sensors 12, 14 are provided as functionally identical ultrasonic sensors 12, 14. Each of the ultrasonic sensors 12, 14 of the third embodiment has essentially the same design as the ultrasonic sensors 12, 14 of the first embodiment. However, the ultrasonic sensors 12, 14 of the third embodiment comprise two additional connectors 50, 52, which are provided as a first and second general purpose input and/or output connector 50, 52 (GPIO). The general purpose input and/or output connectors 50, 52 of the third embodiment can provide and/or receive a logical voltage level. The general purpose input and/or output connectors 50, 52 of the third embodiment can be differently configured, e.g. in respect to chattering.

Similar to the ultrasonic monitoring system 1 of the first embodiment, the ultrasonic monitoring system 1 of the third embodiment comprises two switching devices 44, 54. A first of the switching devices 44, 54 is a reverse gear switch 44, as already discussed above in respect to the first embodiment. However, according to the third embodiment, the reverse gear switch 44 is connected between the DC supply line 18 and the first general purpose input and/or output connector 50. Upon operation of the reverse gear switch 44, the voltage level of the DC supply line 18 is provided to the first general purpose input and/or output connectors 50. A second of the switching devices 44, 54 is a user operated switching device 54. The user operated switching device 54 refers e.g. to a push-button switch or any other kind of manual or electronic switch. The user operated switching device 54 is connected between the DC supply line 18 and the second general purpose input and/or output connector 52. Hence, upon operation of the user operated switching device 54, the voltage level of the DC supply line 18 is provided to the second general purpose input and/or output connector 52.

The ultrasonic monitoring system 1 further comprises a status indicator device 56 connected to the first general purpose input and/or output connector 50 of the last ultrasonic sensor 14 of the cascade 10 of ultrasonic sensors 12, 14, which is initialized as slave. The status indicator device 56 can be a simple lighting device, which is lit when the ultrasonic monitoring system 1 is active or activated/deactivated. Alternatively, the status indicator device 56 is an acoustic output device, which generates a sound when the ultrasonic monitoring system 1 is active or activated/deactivated.

The reverse gear switch 44, the user operated switching device 54, and the status indicator device 56 are depicted in figure 4 merely for one of the cascades 10 of ultrasonic sensors 12, 14 of the ultrasonic monitoring system 1 in order to simplify the drawing. However, also the other cascade 10 of ultrasonic sensors 12, 14 comprises the reverse gear switch 44, the user operated switching device 54, and the status indicator device 56 as described above.

The first of the ultrasonic sensors 12, which is to be initialized as master, can be initialized in different ways. In a first way, the initialization of the first ultrasonic sensor 12 as master is started, when the respective first ultrasonic sensor 12 receives a first initialization message from the LIN node 48, as described above with respect to the second embodiment. In a second way, the initialization of the first ultrasonic sensor 12 as master is started, when the reverse gear switch 44 is closed and the voltage level of the DC supply line 18 is provided to the first general purpose input and/or output connector 50. In a third way, the initialization of the first ultrasonic sensor 12 as master is started, when the user operated switching device 54 is closed and the voltage level of the DC supply line 18 is provided to the second general purpose input and/or output connector 52. Subsequently, each of the ultrasonic sensor 12 initialized as master then starts initialization of the remaining ultrasonic sensors 14 of the respective cascade 10 as described above in respect to the first and second embodiment.

### Reference signs list

- 1: ultrasonic monitoring system
- 10: cascade of ultrasonic sensors
- 12: ultrasonic sensor, master
- 14: ultrasonic sensor, slave
- 16: supply voltage connector
- 18: DC supply line
- 20: ground connector
- 22: ground
- 24: input communication line connector
- 26: first segment of communication line
- 28: communication line
- 30: output communication line connector
- 32: second segment of communication line
- 34: physical driver
- 36: connection unit
- 38: transcoder
- 40: bus connection
- 42: logical router
- 44: switching device, reverse gear switch
- 46: output device, piezo buzzer
- 48: supervising control device, **LIN** node
- 50: additional connector, first general purpose input and output connector
- 52: additional connector, second general purpose input and output connector
- 54: switching device, user operated switching device
- 56: status indicator device
- 58: output switch

## Claims

1. Method for initializing an ultrasonic monitoring system (1) for a vehicle comprising multiple ultrasonic sensors (12, 14) arranged in a cascade (10), wherein the ultrasonic sensors (12, 14) each comprise a supply voltage connector (16) for connection to a DC supply line (18) , a ground connector (20) for connection to ground (22), an input communication line connector (24) connected to a first segment (26) of a communication line (28), in particular for monitoring reception of signals during initialization, and an output communication line connector (30) connected to a second segment (32) of the communication line (28), in particular for transmitting signals during initialization, and a connection unit (36) for interconnecting the input communication line connector (24) and the output communication line connector (30), comprising the steps of
providing an initialization signal as master to a first ultrasonic sensor (12, 14) of the cascade (10) of ultrasonic sensors (12, 14),
performing an initialization of the first ultrasonic sensor (12) of the cascade (10) of ultrasonic sensors (12, 14) as master,
performing an initialization of a subsequent ultrasonic sensor (14) of the cascade (10) of ultrasonic sensors (12, 14) as slave based on an initialization message from the ultrasonic sensor (12) initialized as master, wherein the connection unit (36) interconnects the input communication line connector (24) and the output communication line connector (30) of the respective ultrasonic sensor (14) initialized as slave,
**characterized in that** the method further comprises the following steps:
verifying, if the respective subsequent ultrasonic sensor (12, 14) of the cascade (10) of ultrasonic sensors (12, 14) is a last ultrasonic sensor (12, 14) of the cascade (10) of ultrasonic sensors (12, 14), by verifying a connection of an output device (46) to the respective subsequent ultrasonic sensor (12, 14) of the cascade of ultrasonic sensors (12, 14), in particular verifying a connection of the output device (46) to the output communication line connector (30) of the respective subsequent ultrasonic sensor (12, 14), wherein the respective subsequent ultrasonic sensor (12, 14) being initialized as slave determines an existing connection to the output device (46) and reports this information in the initialization response or a further message to the ultrasonic sensor (12) initialized as master, and
repeatedly performing the above steps of performing an initialization of a subsequent ultrasonic sensor (12, 14) of the cascade (10) of ultrasonic sensors (12, 14) as slave and verifying, if the respective subsequent ultrasonic sensor (12, 14) of the cascade (10) of ultrasonic sensors (12, 14) is a last ultrasonic sensor (12, 14) of the cascade (10) of ultrasonic sensors (12, 14), until the subsequent ultrasonic sensor (12, 14) is the last ultrasonic sensor (12, 14) of the cascade (10) of ultrasonic sensors (12, 14), wherein the last ultrasonic sensor (12, 14) of the cascade (10) of ultrasonic sensors (12, 14) is the ultrasonic sensor (12, 14) of the cascade (10) that is connected to the output device (46) to generate an output corresponding to sensor information received from the ultrasonic sensors of the cascade.

2. Method according to preceding claim 1, **characterized in that**
providing an initialization signal as master to a first ultrasonic sensor (12) of the cascade (10) of ultrasonic sensors (12, 14) comprises providing the initialization signal from a supervising control device (48) to the input communication line connector (24) of the first ultrasonic sensor (12).

3. Method according to any of preceding claims 1 or 2, **characterized in that**
providing an initialization signal as master to a first ultrasonic sensor (12) of the cascade (10) of ultrasonic sensors (12, 14) comprises providing the initialization signal as logical voltage level at an input connector of the first ultrasonic sensor (12), in particular at the input communication line connector (24) of the first ultrasonic sensor (12, 14).

4. Method according to any preceding claim, **characterized in that**
the step of performing an initialization of the subsequent ultrasonic sensor (14) of the cascade (10) of ultrasonic sensors (12, 14) as slave based on an initialization message from the ultrasonic sensor (12) initialized as master comprises the steps of
transmitting the initialization message from the output communication line connector (30) of the ultrasonic sensor (12) initialized as master to the input communication line connector (24) of the respective subsequent ultrasonic sensor (14) of the cascade (10) of ultrasonic sensors (12, 14), and
transmitting an initialization response from the input communication line connector (24) of the respective subsequent ultrasonic sensor (12, 14) of the cascade (10) of ultrasonic sensors (12, 14) to the output communication line connector (30) of the ultrasonic sensor (12) initialized as master.

5. Method according to any preceding claim, **characterized in that**
the method comprises an additional step of
assigning a preset address to each of the ultrasonic sensors (12, 14) of the cascade (10) of ultrasonic sensors (12, 14), in particular upon power-on of the ultrasonic sensors (12, 14) of the cascade (10) of ultrasonic sensors (12, 14), and
performing an initialization of a subsequent ultrasonic sensor (14) of the cascade (10) of ultrasonic sensors (12, 14) as slave based on an initialization message from the ultrasonic sensor (12) initialized as master comprises assigning a unique address to the respective subsequent ultrasonic sensor (12, 14) of the cascade (10) of ultrasonic sensors (12, 14).

6. Method according to claim 5, **characterized in that**
the step of assigning a unique address to the respective subsequent ultrasonic sensor (12, 14) of the cascade (10) of ultrasonic sensors (12, 14) comprises transmitting the unique address from the ultrasonic sensor (12) initialized as master to the respective subsequent ultrasonic sensors (14) of the cascade (10) of ultrasonic sensors (12, 14).

7. Method according to claim 6, **characterized in that**
the step of assigning a unique address to the respective subsequent ultrasonic sensor (12, 14) of the cascade (10) of ultrasonic sensors (12, 14) comprises assigning the address within the respective subsequent ultrasonic sensor (14) of the cascade (10) of ultrasonic sensors (12, 14) upon reception of the initialization message.

8. Method according to any preceding claim in combination with claim 4, **characterized in that**
transmitting the initialization message as slave from the output communication line connector (30) of the ultrasonic sensor (12) initialized master to the input communication line connector (24) of the respective subsequent ultrasonic sensor (12, 14) of the cascade (10) of ultrasonic sensors (12, 14) comprises passing the initialization message as slave through at least one ultrasonic sensor (12, 14) of the cascade (10) of ultrasonic sensors (12, 14), which has already been initialized as slave, and
transmitting an initialization response from the input communication line connector (24) of the respective subsequent ultrasonic sensor (12, 14) of the cascade (10) of ultrasonic sensors (12, 14) to the output communication line connector (30) of the ultrasonic sensor (12) initialized as master comprises passing the initialization response through at least one ultrasonic sensor (12, 14) of the cascade (10) of ultrasonic sensors (12, 14), which has already been initialized as slave.

9. Method according to any preceding claim, **characterized in that**
verifying, if the respective subsequent ultrasonic sensor (12, 14) of the cascade (10) of ultrasonic sensors (12, 14) is a last ultrasonic sensor (12, 14) of the cascade (10) of ultrasonic sensors (12, 14), comprises applying a timeout for reception of an initialization response in respect to the initialization message.

10. Method according to any preceding claim, **characterized in that**
the method comprises an additional step of determining a number of ultrasonic sensors (14) initialized as slaves connected to the ultrasonic sensor (12) initialized as master based on the number of initializations of subsequent ultrasonic sensors (14) of the cascade (10) of ultrasonic sensors (12, 14) initialized as slave.

11. Method according to any preceding claim, **characterized in that**
the method comprises an additional step of selecting an appropriate measurement scheduler for the ultrasonic sensors (12, 14) of the ultrasonic monitoring system (1) based on the number of ultrasonic sensors (14) initialized as slaves connected to the ultrasonic sensor (12) initialized as master.

12. Ultrasonic monitoring system (1) for a vehicle comprising multiple ultrasonic sensors (12, 14) arranged in a cascade (10), wherein each of the multiple ultrasonic sensors (12, 14) comprises a supply voltage connector (16) for connection to a DC supply line (18), a ground connector (20) for connection to ground (22), an input communication line connector (24) connected to a first segment (26) of a communication line (28), in particular for monitoring reception of signals during initialization, an output communication line connector (30) for connecting to a second segment (32) of the communication line (28), in particular for transmitting signals during initialization, and a connection unit (36) for interconnecting the input communication line connector (24) and the output communication line connector (30), wherein the ultrasonic monitoring system (1) is adapted to perform the method according to any of preceding claims 1 to 11.

## Patentansprüche

1. Verfahren zur Initialisierung eines Ultraschall-Überwachungssystems (1) für ein Fahrzeug, das mehrere in einer Kaskade (10) angeordnete Ultraschallsensoren (12, 14) umfasst, wobei die Ultraschallsensoren (12, 14) jeweils einen Versorgungsspannungsanschluss (16) zur Verbindung mit einer Gleichstromversorgungsleitung (18), einen Masseanschluss (20) zur Verbindung mit Masse (22), einen Eingangs-Kommunikationsleitungsanschluss (24), der mit einem ersten Segment (26) einer Kommunikationsleitung (28) verbunden ist, insbesondere zur Überwachung des Empfangs von Signalen während der Initialisierung, und einen Ausgangs-Kommunikationsleitungsanschluss (30), der mit einem zweiten Segment (32) der Kommunikationsleitung (28) verbunden ist, insbesondere zur Übertragung von Signalen während der Initialisierung, sowie eine Verbindungseinheit (36) zur Verbindung des Eingangs-Kommunikationsleitungsanschlusses (24) und des Ausgangs-Kommunikationsleitungsanschlusses (30) miteinander umfassen, mit den Schritten: Bereitstellen eines Initialisierungssignals als Master an einen ersten Ultraschallsensor (12, 14) der Kaskade (10) von Ultraschallsensoren (12, 14), Durchführen einer Initialisierung des ersten Ultraschallsensors (12) der Kaskade (10) von Ultraschallsensoren (12, 14) als Master, Durchführen einer Initialisierung eines nachfolgenden Ultraschallsensors (14) der Kaskade (10) von Ultraschallsensoren (12, 14) als Slave basierend auf einer Initialisierungsnachricht von dem als Master initialisierten Ultraschallsensor (12), wobei die Verbindungseinheit (36) den Eingangs-Kommunikationsleitungsanschluss (24) und den Ausgangs-Kommunikationsleitungsanschluss (30) des jeweiligen als Slave initialisierten Ultraschallsensors (14) miteinander verbindet, **dadurch gekennzeichnet, dass** das Verfahren ferner die folgenden Schritte umfasst: Überprüfen, ob der jeweilige nachfolgende Ultraschallsensor (12, 14) der Kaskade (10) von Ultraschallsensoren (12, 14) ein letzter Ultraschallsensor (12, 14) der Kaskade (10) von Ultraschallsensoren (12, 14) ist, durch Überprüfen einer Verbindung eines Ausgabegeräts (46) mit dem jeweiligen nachfolgenden Ultraschallsensor (12, 14) der Kaskade von Ultraschallsensoren (12, 14), insbesondere Überprüfen einer Verbindung des Ausgabegeräts (46) mit dem Ausgangs-Kommunikationsleitungsanschluss (30) des jeweiligen nachfolgenden Ultraschallsensors (12, 14), wobei der jeweilige als Slave initialisierte nachfolgende Ultraschallsensor (12, 14) eine bestehende Verbindung zum Ausgabegerät (46) ermittelt und diese Information in der Initialisierungsantwort oder einer weiteren Nachricht an den als Master initialisierten Ultraschallsensor (12) meldet, und wiederholtes Durchführen der oben genannten Schritte des Durchführens einer Initialisierung eines nachfolgenden Ultraschallsensors (12, 14) der Kaskade (10) von Ultraschallsensoren (12, 14) als Slave und des Überprüfens, ob der jeweilige nachfolgende Ultraschallsensor (12, 14) der Kaskade (10) von Ultraschallsensoren (12, 14) ein letzter Ultraschallsensor (12, 14) der Kaskade (10) von Ultraschallsensoren (12, 14) ist, bis der nachfolgende Ultraschallsensor (12, 14) der letzte Ultraschallsensor (12, 14) der Kaskade (10) von Ultraschallsensoren (12, 14) ist, wobei der letzte Ultraschallsensor (12, 14) der Kaskade (10), der mit dem Ausgabegerät (46) verbunden ist, eine Ausgabe erzeugt, die den von den Ultraschallsensoren der Kaskade empfangenen Sensorinformationen entspricht.

2. Verfahren nach dem vorhergehenden Anspruch 1, **dadurch gekennzeichnet, dass** das Bereitstellen eines Initialisierungssignals als Master an einen ersten Ultraschallsensor (12) der Kaskade (10) von Ultraschallsensoren (12, 14) das Bereitstellen des Initialisierungssignals von einem übergeordneten Steuergerät (48) an den Eingangs-Kommunikationsleitungsanschluss (24) des ersten Ultraschallsensors (12) umfasst.

3. Verfahren nach einem der vorhergehenden Ansprüche 1 oder 2, **dadurch gekennzeichnet, dass** das Bereitstellen eines Initialisierungssignals als Master an einen ersten Ultraschallsensor (12) der Kaskade (10) von Ultraschallsensoren (12, 14) das Bereitstellen des Initialisierungssignals als logischen Spannungspegel an einem Eingangsanschluss des ersten Ultraschallsensors (12), insbesondere an dem Eingangs-Kommunikationsleitungsanschluss (24) des ersten Ultraschallsensors (12, 14), umfasst.

4. Verfahren nach einem der vorhergehenden Ansprüche, **dadurch gekennzeichnet, dass** der Schritt des Durchführens einer Initialisierung des nachfolgenden Ultraschallsensors (14) der Kaskade (10) von Ultraschallsensoren (12, 14) als Slave basierend auf einer Initialisierungsnachricht von dem als Master initialisierten Ultraschallsensor (12) die Schritte umfasst: Übertragen der Initialisierungsnachricht vom Ausgangs-Kommunikationsleitungsanschluss (30) des als Master initialisierten Ultraschallsensors (12) an den Eingangs-Kommunikationsleitungsanschluss (24) des jeweiligen nachfolgenden Ultraschallsensors (14) der Kaskade (10) von Ultraschallsensoren (12, 14), und Übertragen einer Initialisierungsantwort vom Eingangs-Kommunikationsleitungsanschluss (24) des jeweiligen nachfolgenden Ultraschallsensors (12, 14) der Kaskade (10) von Ultraschallsensoren (12, 14) an den Ausgangs-Kommunikationsleitungsanschluss (30) des als Master initialisierten Ultraschallsensors (12).

5. Verfahren nach einem der vorhergehenden Ansprüche, **dadurch gekennzeichnet, dass** das Verfahren einen zusätzlichen Schritt des Zuweisens einer voreingestellten Adresse an jeden der Ultraschallsensoren (12, 14) der Kaskade (10) von Ultraschallsensoren (12, 14) umfasst, insbesondere beim Einschalten der Ultraschallsensoren (12, 14) der Kaskade (10) von Ultraschallsensoren (12, 14), und das Durchführen einer Initialisierung eines nachfolgenden Ultraschallsensors (14) der Kaskade (10) von Ultraschallsensoren (12, 14) als Slave basierend auf einer Initialisierungsnachricht von dem als Master initialisierten Ultraschallsensor (12) das Zuweisen einer eindeutigen Adresse an den jeweiligen nachfolgenden Ultraschallsensor (12, 14) der Kaskade (10) von Ultraschallsensoren (12, 14) umfasst.

6. Verfahren nach Anspruch 5, **dadurch gekennzeichnet, dass** der Schritt des Zuweisens einer eindeutigen Adresse an den jeweiligen nachfolgenden Ultraschallsensor (12, 14) der Kaskade (10) von Ultraschallsensoren (12, 14) das Übertragen der eindeutigen Adresse vom als Master initialisierten Ultraschallsensor (12) an die jeweiligen nachfolgenden Ultraschallsensoren (14) der Kaskade (10) von Ultraschallsensoren (12, 14) umfasst.

7. Verfahren nach Anspruch 6, **dadurch gekennzeichnet, dass** der Schritt des Zuweisens einer eindeutigen Adresse an den jeweiligen nachfolgenden Ultraschallsensor (12, 14) der Kaskade (10) von Ultraschallsensoren (12, 14) das Zuweisen der Adresse innerhalb des jeweiligen nachfolgenden Ultraschallsensors (14) der Kaskade (10) von Ultraschallsensoren (12, 14) beim Empfang der Initialisierungsnachricht umfasst.

8. Verfahren nach einem der vorhergehenden Ansprüche in Verbindung mit Anspruch 4, **dadurch gekennzeichnet, dass** das Übertragen der Initialisierungsnachricht als Slave vom Ausgangs-Kommunikationsleitungsanschluss (30) des als Master initialisierten Ultraschallsensors (12) an den Eingangs-Kommunikationsleitungsanschluss (24) des jeweiligen nachfolgenden Ultraschallsensors (12, 14) der Kaskade (10) von Ultraschallsensoren (12, 14) das Weiterleiten der Initialisierungsnachricht als Slave durch mindestens einen Ultraschallsensor (12, 14) der Kaskade (10) von Ultraschallsensoren (12, 14), der bereits als Slave initialisiert wurde, umfasst, und das Übertragen einer Initialisierungsantwort vom Eingangs-Kommunikationsleitungsanschluss (24) des jeweiligen nachfolgenden Ultraschallsensors (12, 14) der Kaskade (10) von Ultraschallsensoren (12, 14) an den Ausgangs-Kommunikationsleitungsanschluss (30) des als Master initialisierten Ultraschallsensors (12) das Weiterleiten der Initialisierungsantwort durch mindestens einen Ultraschallsensor (12, 14) der Kaskade (10) von Ultraschallsensoren (12, 14), der bereits als Slave initialisiert wurde, umfasst.

9. Verfahren nach einem der vorhergehenden Ansprüche, **dadurch gekennzeichnet, dass** das Überprüfen, ob der jeweilige nachfolgende Ultraschallsensor (12, 14) der Kaskade (10) von Ultraschallsensoren (12, 14) ein letzter Ultraschallsensor (12, 14) der Kaskade (10) von Ultraschallsensoren (12, 14) ist, das Anwenden eines Timeouts für den Empfang einer Initialisierungsantwort in Bezug auf die Initialisierungsnachricht umfasst.

10. Verfahren nach einem der vorhergehenden Ansprüche, **dadurch gekennzeichnet, dass** das Verfahren einen zusätzlichen Schritt des Bestimmens einer Anzahl von als Slaves initialisierten Ultraschallsensoren (14), die mit dem als Master initialisierten Ultraschallsensor (12) verbunden sind, basierend auf der Anzahl der Initialisierungen nachfolgender als Slave initialisierter Ultraschallsensoren (14) der Kaskade (10) von Ultraschallsensoren (12, 14) umfasst.

11. Verfahren nach einem der vorhergehenden Ansprüche, **dadurch gekennzeichnet, dass** das Verfahren einen zusätzlichen Schritt des Auswählens eines geeigneten Messplaners für die Ultraschallsensoren (12, 14) des Ultraschall-Überwachungssystems (1) basierend auf der Anzahl der als Slaves initialisierten Ultraschallsensoren (14), die mit dem als Master initialisierten Ultraschallsensor (12) verbunden sind, umfasst.

12. Ultraschall-Überwachungssystem (1) für ein Fahrzeug, das mehrere in einer Kaskade (10) angeordnete Ultraschallsensoren (12, 14) umfasst, wobei jeder der mehreren Ultraschallsensoren (12, 14) einen Versorgungsspannungsanschluss (16) zur Verbindung mit einer Gleichstromversorgungsleitung (18), einen Masseanschluss (20) zur Verbindung mit Masse (22), einen Eingangs-Kommunikationsleitungsanschluss (24), der mit einem ersten Segment (26) einer Kommunikationsleitung (28) verbunden ist, insbesondere zur Überwachung des Empfangs von Signalen während der Initialisierung, einen Ausgangs-Kommunikationsleitungsanschluss (30) zur Verbindung mit einem zweiten Segment (32) der Kommunikationsleitung (28), insbesondere zur Übertragung von Signalen während der Initialisierung, sowie eine Verbindungseinheit (36) zur Verbindung des Eingangs-Kommunikationsleitungsanschlusses (24) und des Ausgangs-Kommunikationsleitungsanschlusses (30) miteinander umfasst, wobei das Ultraschall-Überwachungssystem (1) dazu ausgelegt ist, das Verfahren nach einem der vorhergehenden Ansprüche 1 bis 11 durchzuführen.

## Revendications

1. Procédé d'initialisation d'un système de surveillance ultrasonique (1) pour un véhicule comprenant plusieurs capteurs ultrasoniques (12, 14) disposés en cascade (10), dans lequel les capteurs ultrasoniques (12, 14) comprennent chacun un connecteur de tension d'alimentation (16) pour la connexion à une ligne d'alimentation en courant continu (18), un connecteur de masse (20) pour la connexion à la masse (22), un connecteur de ligne de communication d'entrée (24) connecté à un premier segment (26) d'une ligne de communication (28), en particulier pour surveiller la réception de signaux pendant l'initialisation, et un connecteur de ligne de communication de sortie (30) connecté à un deuxième segment (32) de la ligne de communication (28), en particulier pour transmettre des signaux pendant l'initialisation, et une unité de connexion (36) pour interconnecter le connecteur de ligne de communication d'entrée (24) et le connecteur de ligne de communication de sortie (30), comprenant les étapes consistant à fournir un signal d'initialisation en tant que maître à un premier capteur ultrasonique (12, 14) de la cascade (10) de capteurs ultrasoniques (12, 14), effectuer une initialisation du premier capteur ultrasonique (12) de la cascade (10) de capteurs ultrasoniques (12, 14) en tant que maître, effectuer une initialisation d'un capteur ultrasonique suivant (14) de la cascade (10) de capteurs ultrasoniques (12, 14) en tant qu'esclave sur la base d'un message d'initialisation provenant du capteur ultrasonique (12) initialisé en tant que maître, dans lequel l'unité de connexion (36) interconnecte le connecteur de ligne de communication d'entrée (24) et le connecteur de ligne de communication de sortie (30) du capteur ultrasonique respectif (14) initialisé en tant qu'esclave, **caractérisé en ce que** le procédé comprend en outre les étapes suivantes : vérifier si le capteur ultrasonique suivant respectif (12, 14) de la cascade (10) de capteurs ultrasoniques (12, 14) est un dernier capteur ultrasonique (12, 14) de la cascade (10) de capteurs ultrasoniques (12, 14), en vérifiant une connexion d'un dispositif de sortie (46) au capteur ultrasonique suivant respectif (12, 14) de la cascade de capteurs ultrasoniques (12, 14), en particulier en vérifiant une connexion du dispositif de sortie (46) au connecteur de ligne de communication de sortie (30) du capteur ultrasonique suivant respectif (12, 14), dans lequel le capteur ultrasonique suivant respectif (12, 14) étant initialisé en tant qu'esclave détermine une connexion existante au dispositif de sortie (46) et rapporte cette information dans la réponse d'initialisation ou un message supplémentaire au capteur ultrasonique (12) initialisé en tant que maître, et effectuer de manière répétée les étapes susmentionnées consistant à effectuer une initialisation d'un capteur ultrasonique suivant (12, 14) de la cascade (10) de capteurs ultrasoniques (12, 14) en tant qu'esclave et à vérifier si le capteur ultrasonique suivant respectif (12, 14) de la cascade (10) de capteurs ultrasoniques (12, 14) est un dernier capteur ultrasonique (12, 14) de la cascade (10) de capteurs ultrasoniques (12, 14), jusqu'à ce que le capteur ultrasonique suivant (12, 14) soit le dernier capteur ultrasonique (12, 14) de la cascade (10) de capteurs ultrasoniques (12, 14), dans lequel le dernier capteur ultrasonique (12, 14) de la cascade (10) est connecté au dispositif de sortie (46) pour générer une sortie correspondant aux informations de capteur reçues des capteurs ultrasoniques de la cascade.

2. Procédé selon la revendication précédente 1, **caractérisé en ce que** la fourniture d'un signal d'initialisation en tant que maître à un premier capteur ultrasonique (12) de la cascade (10) de capteurs ultrasoniques (12, 14) comprend la fourniture du signal d'initialisation depuis un dispositif de contrôle de supervision (48) au connecteur de ligne de communication d'entrée (24) du premier capteur ultrasonique (12).

3. Procédé selon l'une quelconque des revendications précédentes 1 ou 2, **caractérisé en ce que** la fourniture d'un signal d'initialisation en tant que maître à un premier capteur ultrasonique (12) de la cascade (10) de capteurs ultrasoniques (12, 14) comprend la fourniture du signal d'initialisation en tant que niveau de tension logique à un connecteur d'entrée du premier capteur ultrasonique (12), en particulier au connecteur de ligne de communication d'entrée (24) du premier capteur ultrasonique (12, 14).

4. Procédé selon l'une quelconque des revendications précédentes, **caractérisé en ce que** l'étape consistant à effectuer une initialisation du capteur ultrasonique suivant (14) de la cascade (10) de capteurs ultrasoniques (12, 14) en tant qu'esclave sur la base d'un message d'initialisation provenant du capteur ultrasonique (12) initialisé en tant que maître comprend les étapes consistant à transmettre le message d'initialisation depuis le connecteur de ligne de communication de sortie (30) du capteur ultrasonique (12) initialisé en tant que maître au connecteur de ligne de communication d'entrée (24) du capteur ultrasonique suivant respectif (14) de la cascade (10) de capteurs ultrasoniques (12, 14), et à transmettre une réponse d'initialisation depuis le connecteur de ligne de communication d'entrée (24) du capteur ultrasonique suivant respectif (12, 14) de la cascade (10) de capteurs ultrasoniques (12, 14) au connecteur de ligne de communication de sortie (30) du capteur ultrasonique (12) initialisé en tant que maître.

5. Procédé selon l'une quelconque des revendications précédentes, **caractérisé en ce que** le procédé comprend une étape supplémentaire consistant à attribuer une adresse prédéfinie à chacun des capteurs ultrasoniques (12, 14) de la cascade (10) de capteurs ultrasoniques (12, 14), en particulier lors de la mise sous tension des capteurs ultrasoniques (12, 14) de la cascade (10) de capteurs ultrasoniques (12, 14), et effectuer une initialisation d'un capteur ultrasonique suivant (14) de la cascade (10) de capteurs ultrasoniques (12, 14) en tant qu'esclave sur la base d'un message d'initialisation provenant du capteur ultrasonique (12) initialisé en tant que maître comprend l'attribution d'une adresse unique au capteur ultrasonique suivant respectif (12, 14) de la cascade (10) de capteurs ultrasoniques (12, 14).

6. Procédé selon la revendication 5, **caractérisé en ce que** l'étape consistant à attribuer une adresse unique au capteur ultrasonique suivant respectif (12, 14) de la cascade (10) de capteurs ultrasoniques (12, 14) comprend la transmission de l'adresse unique depuis le capteur ultrasonique (12) initialisé en tant que maître aux capteurs ultrasoniques suivants respectifs (14) de la cascade (10) de capteurs ultrasoniques (12, 14).

7. Procédé selon la revendication 6, **caractérisé en ce que** l'étape consistant à attribuer une adresse unique au capteur ultrasonique suivant respectif (12, 14) de la cascade (10) de capteurs ultrasoniques (12, 14) comprend l'attribution de l'adresse au sein du capteur ultrasonique suivant respectif (14) de la cascade (10) de capteurs ultrasoniques (12, 14) lors de la réception du message d'initialisation.

8. Procédé selon l'une quelconque des revendications précédentes en combinaison avec la revendication 4, **caractérisé en ce que** la transmission du message d'initialisation en tant qu'esclave depuis le connecteur de ligne de communication de sortie (30) du capteur ultrasonique (12) initialisé en tant que maître au connecteur de ligne de communication d'entrée (24) du capteur ultrasonique suivant respectif (12, 14) de la cascade (10) de capteurs ultrasoniques (12, 14) comprend le passage du message d'initialisation en tant qu'esclave à travers au moins un capteur ultrasonique (12, 14) de la cascade (10) de capteurs ultrasoniques (12, 14), qui a déjà été initialisé en tant qu'esclave, et la transmission d'une réponse d'initialisation depuis le connecteur de ligne de communication d'entrée (24) du capteur ultrasonique suivant respectif (12, 14) de la cascade (10) de capteurs ultrasoniques (12, 14) au connecteur de ligne de communication de sortie (30) du capteur ultrasonique (12) initialisé en tant que maître comprend le passage de la réponse d'initialisation à travers au moins un capteur ultrasonique (12, 14) de la cascade (10) de capteurs ultrasoniques (12, 14), qui a déjà été initialisé en tant qu'esclave.

9. Procédé selon l'une quelconque des revendications précédentes, **caractérisé en ce que** la vérification du fait que le capteur ultrasonique suivant respectif (12, 14) de la cascade (10) de capteurs ultrasoniques (12, 14) est un dernier capteur ultrasonique (12, 14) de la cascade (10) de capteurs ultrasoniques (12, 14) comprend l'application d'un délai d'expiration pour la réception d'une réponse d'initialisation par rapport au message d'initialisation.

10. Procédé selon l'une quelconque des revendications précédentes, **caractérisé en ce que** le procédé comprend une étape supplémentaire consistant à déterminer un nombre de capteurs ultrasoniques (14) initialisés en tant qu'esclaves connectés au capteur ultrasonique (12) initialisé en tant que maître sur la base du nombre d'initialisations de capteurs ultrasoniques suivants (14) de la cascade (10) de capteurs ultrasoniques (12, 14) initialisés en tant qu'esclaves.

11. Procédé selon l'une quelconque des revendications précédentes, **caractérisé en ce que** le procédé comprend une étape supplémentaire consistant à sélectionner un planificateur de mesure approprié pour les capteurs ultrasoniques (12, 14) du système de surveillance ultrasonique (1) sur la base du nombre de capteurs ultrasoniques (14) initialisés en tant qu'esclaves connectés au capteur ultrasonique (12) initialisé en tant que maître.

12. Système de surveillance ultrasonique (1) pour un véhicule comprenant plusieurs capteurs ultrasoniques (12, 14) disposés en cascade (10), dans lequel chacun des multiples capteurs ultrasoniques (12, 14) comprend un connecteur de tension d'alimentation (16) pour la connexion à une ligne d'alimentation en courant continu (18), un connecteur de masse (20) pour la connexion à la masse (22), un connecteur de ligne de communication d'entrée (24) connecté à un premier segment (26) d'une ligne de communication (28), en particulier pour surveiller la réception de signaux pendant l'initialisation, un connecteur de ligne de communication de sortie (30) pour la connexion à un deuxième segment (32) de la ligne de communication (28), en particulier pour transmettre des signaux pendant l'initialisation, et une unité de connexion (36) pour interconnecter le connecteur de ligne de communication d'entrée (24) et le connecteur de ligne de communication de sortie (30), dans lequel le système de surveillance ultrasonique (1) est adapté pour mettre en œuvre le procédé selon l'une quelconque des revendications précédentes 1 à 11.
